# EUROPÄISCHE PATENTSCHRIFT

(11) **EP 1 813 404 B1**
(45) Veröffentlichungstag und Bekanntmachung des Hinweises auf die Patenterteilung: **25.12.2013**
(21) Anmeldenummer: 07001643.1
(22) Anmeldetag: 25.01.2007
(51) Int. Cl.: B29C 33/38, B29C 33/56, B22D 11/00, B29C 70/46

(54) **Formwerkzeug**
Moulding tool
Outil de formage

(30) Priorität: 01.02.2006 DE 102006004906; 26.01.2006 DE 102006003934
(43) Veröffentlichungstag der Anmeldung: 01.08.2007
(73) Patentinhaber: Georg Fritzmeier GmbH + Co. KG, 85655 Grosshelfendorf (DE)
(72) Erfinder: Berger, Peter, 83024 Rosenheim (DE)
(74) Vertreter: Winter, Brandl, Fürniss, Hübner, Röss, Kaiser, Polte - Partnerschaft

(56) Entgegenhaltungen:
- EP-A- 1 277 554
- EP-A1- 1 318 002
- WO-A-97/31733
- DE-A1- 10 159 456
- JP-A- 57 157 708
- JP-A- 62 292 410
- JP-A- 2005 329 555

## Beschreibung

Die Erfindung betrifft ein Formwerkzeug zur Herstellung von Formteilen aus Verbundmaterialien.

Derartige Formteile werden beispielsweise im SMC (sheet moulding compound), RTM (resin transfer moulding) oder LFI-Verfahren (long fibre injection) oder nach den anderen bekannten Herstellverfahren für Formteile aus Verbundwerkstoffen gefertigt. Es handelt sich dabei überwiegend um großflächige faserverstärkte Formteile, beispielsweise Windabweiser von Nutzfahrzeugen oder andere Karosserie- oder Verkleidungsbauteile von Fahrzeugen. Bei den bisher verwendeten Formwerkzeugen werden die die Kavität des Formwerkzeug begrenzenden Bereiche der Matrize und des Stempels des Formwerkzeuges durch Nickelschalen gebildet, die beispielsweise galvanisch oder durch Aufdampfen auf einer Tragschicht ausgebildet werden. Diese Herstellverfahren sind extrem zeitaufwendig, so dass beispielsweise das galvanische Ausbilden der Nickelschale 8 bis 10 Wochen dauert. Das Ausbilden der Schicht durch Aufdampfen dauert ca. 40 Stunden, wobei erheblicher verfahrenstechnischer Aufwand erforderlich ist, so dass derartige Formwerkzeuge aus Nickelschalen zum Einen äußerst teuer sind und zum Anderen lange Lieferzeiten haben, so dass kurzfristige Produktionsänderungen nicht möglich sind. Ein weiterer Nachteil besteht darin, dass diese Nickelschalen nicht oder nur mit großem Aufwand zu reparieren sind, falls diese beispielsweise beim Entformen des Formteils beschädigt werden.

Eine weitere bekannte Möglichkeit zur Herstellung von Formwerkzeugen ist, dass der Stempel und die Matrize aus dem Vollen gefräst werden - ein derartiges Verfahren erfordert einen erheblichen Fertigungs- und Materialaufwand und wird daher im Wesentlichen bei kleineren Werkzeugen angewendet.

Ausführungsformen von Formwerkzeuge sind in den Dokumenten WO-A-9731733, JP-A-57157708 offenbart. JP 2005 329 555 offenbart ein Formwerkzeug gemäß dem Oberbegriff des Anspruchs 1.

Demgegenüber liegt der Erfindung die Aufgabe zugrunde, ein Formwerkzeug zu schaffen, das vergleichsweise schnell und preisgünstig herstellbar ist.

Diese Aufgabe wird durch ein Formwerkzeug mit den Merkmalen des Patentanspruchs 1 gelöst.

Erfindungsgemäß besteht das Formwerkzeug aus einer dünnwandigen Gussschale, die in eine Tragkonstruktion eingesetzt ist. Es zeigte sich überraschenderweise, dass im Gießverfahren hergestellte Werkzeugschalen die für den Pressvorgang erforderliche Festigkeit aufweisen und mit der erforderlichen Genauigkeit bearbeitbar sind, wobei die Kosten für die Herstellung dieser Gussschalen nur ein Bruchteil der Kosten für die eingangs beschriebenen Nickelschalen beträgt. Die Gießform für die Gussschalen kann beispielsweise mit einem sehr einfach zu bearbeitenden Sandkern ausgebildet sein, so dass die für das Gießverfahren zu veranschlagenden Formkosten äußerst gering sind.

Beim Herstellen der dünnwandigen Gussschale wird diese mit einem Aufmaß gefertigt, so dass die das Formteil ausbildenden Flächenbereiche nach dem Gießen feinstbearbeitet werden können. Diese Feinstbearbeitung kann beispielsweise durch Polieren, Fräsen/Polieren etc. erfolgen. D.h., durch das Gießverfahren werden diese Flächenbereiche zunächst mit den beim Gießen möglichen Genauigkeiten ausgebildet und erst in einem anschließenden Verfahren auf Maß gebracht.

Die Wandstärke dieser Gussschale beträgt vorzugsweise nur etwa 35 mm, wobei das Aufmaß von etwa 10 mm eingerechnet ist.

Zur Temperierung des Werkzeuges werden in der Gussschale Kühl- oder Heizmittelkanäle ausgebildet. Dies kann beispielsweise dadurch geschehen, dass vorbestimmte Bereiche der Gußschale mit Einfräsungen versehen werden, in die dann Kühlmittelrohre eingelegt werden. Alternativ können die Kühlmittelrohre bereits in die Gießform eingelegt werden - in diesem Fall wird es bevorzugt, diese Kühlrohre aus hochtemperarturbeständigem Material, beipielsweise Keramik auszubilden.

Als Gussmaterial zur Herstellung der Werkzeugschalen kann Werkzeugstahl, beispielsweise 40CRMnMo7 1.2311 verwendet werden.

Ein bevorzugtes Ausführungsbeispiel der Erfindung wird im Folgenden anhand schematischer Zeichnungen näher erläutert. Es zeigen:
Figur 1 eine dreidimensionale Ansicht einer Matrize und eines Stempels eines erfindungsgemäßen Formwerkzeuges;
Figur 2 eine Einzeldarstellung des Stempels aus Figur 2 in der Ansicht von unten (Figur 1);
Figur 3 eine Rückansicht des Stempels aus Figur 2;
Figur 4 eine geschnittene Seitenansicht des Stempels gemäß Figur 4;
Figuren 5, 6 ein Detail D gemäß Figur 4 in unterschiedlichen Ausführungsformen;
Figur 7 eine Einzelansicht der Matrize aus Figur 1;
Figur 8 eine Rückansicht der Matrize gemäß Figur 7;
Figur 9 eine geschnittene Seitenansicht der Matrize aus Figur 7 und
Figuren 10, 11 ein Detail B in Figur 9 in unterschiedlichen Ausführungsformen.

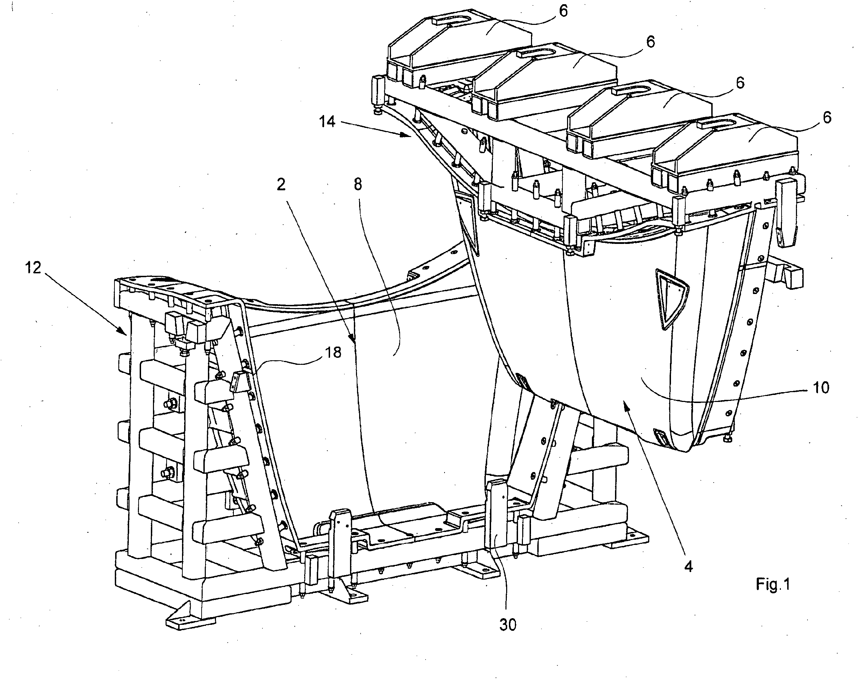

Die Erfindung sei anhand eines Windabweisers beschrieben, der nach dem RTM-Verfahren hergestellt ist. Selbstverständlich kann das im Folgenden beschriebene Formwerkzeug auch für alle anderen bekannten Verfahren zur Herstellung von Verbundwerkstoffen verwendet werden. Das erfindungsgemäße Formwerkzeug besteht im Wesentlichen aus einer Matrize 2 und einem Sempel 4, der in der Ansicht gemäß Figur 1 der besseren Übersichtlichkeit halber um 90° um seine Hochachse verschwenkt dargestellt ist. Die Matrize 2 und der Stempel 4 begrenzen im nicht dargestellten geschlossenen Zustand des Formwerkzeugs - im Folgenden Werkzeug genannt - eine Kavität, die der Form des Windabweisers entspricht. Beim dargestellten Ausführungsbeispiel ist das Werkzeug stehend ausgeführt, wobei der Stempel 4 über vier Konsolen 6 an einem Stempelholm der Presseinrichtung befestigt und in Vertikalrichtung verfahrbar ist, um das Werkzeug zu öffnen oder zu schließen.

Sowohl der Stempel 4 als auch die Matrize 2 bestehen im Wesentlichen aus einer vergleichsweise dünnwandigen Gussschale, im Folgenden Matrizenschale 2 und Stempelschale 10 genannt, die jeweils in einem Tragrahmen 12 bzw. 14 aufgenommen und abgestützt sind. Gemäß Figur 1 sind die Konsolen 6 am Tragrahmen 14 befestigt, so dass der Stempel 4 hängend am genannten Stempelholm befestigt ist. Diese Tragrahmen 12, 14 sind derart ausgebildet, dass sie die durch den beim Pressvorgang und dem damit verbundenen hohen Forminnendruck entstehenden Kräfte aufnehmen und die Schalen 8, 10 so abstützen, dass die gewünschte Formteilqualität erzielbar ist.

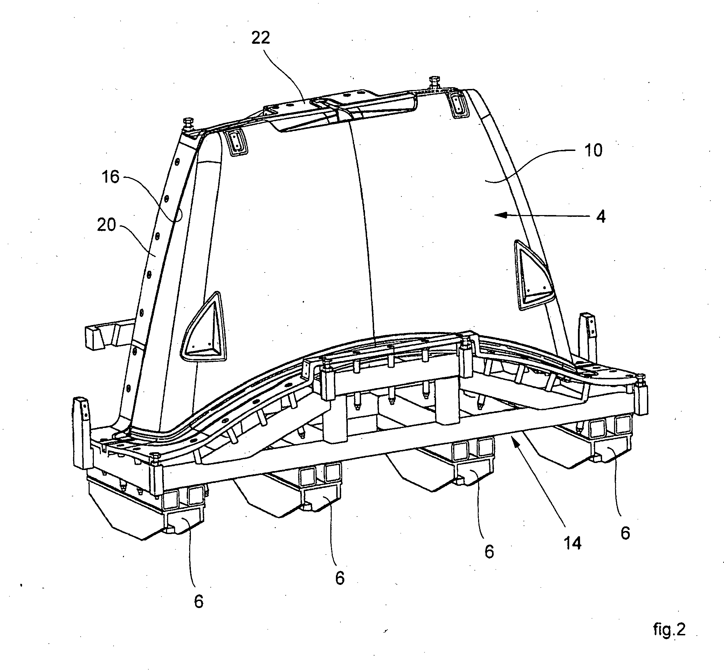

In Figur 2 ist der Stempel 4 um 180° gedreht, sozusagen auf den Kopf gestellt, so dass die Konsolen 6 nach unten weisen. Man sieht die die Kavität des Werkzeugs begrenzende Stempelschale 10, die entsprechend der Windabweisergeometrie ausgebildet ist. Die Trennebene zwischen Stempel 4 und Matrize 2 ist durch den umlaufenden, stufenförmig vorspringenden Formrand 16 bestimmt, der mit einer entsprechend ausgeformten Stirnwandung 18 (siehe Figur 1) mit der Matrizenschale 8 zusammenwirkt, um die Kavität abzudichten. Der sich nach hinten an den umlaufenden Formrand 16 anschließende Schalenrand 20 dient auch zur Befestigung der Stempelschale 10 am Tragrahmen 14. An dem in Figur 2 oben liegenden Bereich des etwa U-förmig ausgebildeten Schalenrandes 20 ist ein Anschuss (Anguss) 22 ausgebildet, über den das Harz in die Kavität injiziert wird.

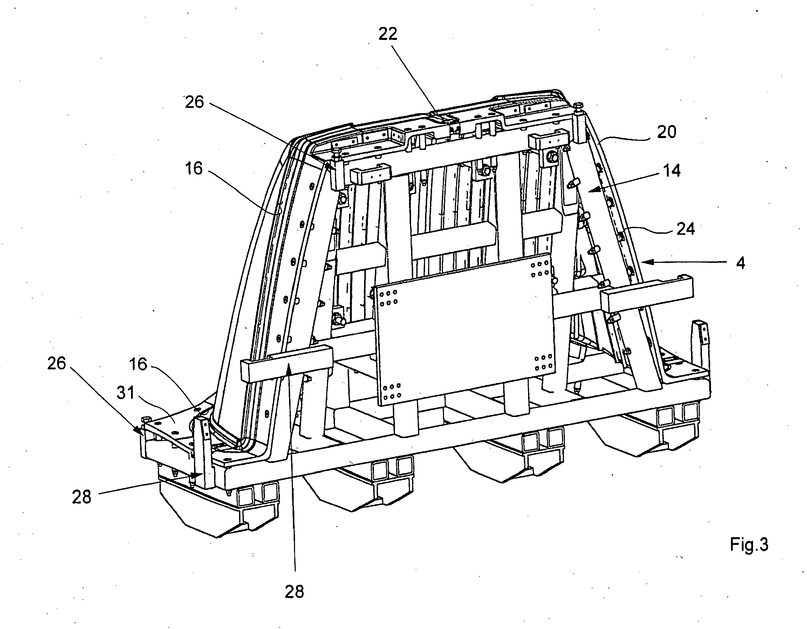

Figur 3 zeigt den Stempel 4 gemäß Figur 2 von hinten, wobei die Abstützung durch den Tragrahmen 14 sichtbar ist. Dieser bildet eine Hinterbauung, über die die auf die Stempelschale 10 einwirkenden Kräfte aufgefangen werden können. Die Abstützung der Stempelschale 10 erfolgt über eine Vielzahl von Stützbolzen 24, die in Streben des Tragrahmens 14 verankert sind und insbesondere entlang des Schalenrandes 20 und auch von innen an der von der Werkzeugkavität abgewandeten Großfläche (sichtbar in Figur 3) der Stempelschale 10 angreifen. Die Stützbolzen 24 durchsetzen zumindest im Bereich des Schalenrandes 20 die Wandung der Stempelschale 10.

An dem Tragrahmen 14 sind des Weiteren noch eine Vielzahl von Distanzelementen 26 ausgebildet, die im geschlossenen Zustand des Werkzeugs die Relativposition zwischen Matize 2 und Stempel 4 bestimmen und verhindern, dass der Stempel 4 zu tief in die Matrize 2 eintaucht. Diese Distanzelemente 26 sind verstellbar ausgeführt, so dass von Verfahrensparametern abhängige Toleranzüberschreitungen in der Formteilwandstärke ausgeglichen werden können. Die Relativpositionsierung und Verriegelung von Matrize 2 und Stempel 4 erfolgt des Weiteren über Führungen/Verriegelungen 28, die mit entsprechenden Führungsteilen 30 (siehe Figur 1) der Matrize zusammenwirken, um diese zueinander zu positionieren und verriegeln. Insbesondere Figur 3 entnehmbar ist, dass der Schalenrand 20 in dem konsolenseitigen Bereich 6 zu einem seitlich auskragenden Stützrand 31 ausgeformt ist, über den der Stempel 4 an dem konsolenseitigen Bereich des Tragrahmens 4 befestigt ist.

Wie eingangs erwähnt erfolgt die Herstellung der Stempelschale 10 nach einem herkömmlichen Stahlgießverfahren, wobei beispielsweise gefräste Sandkerne oder ein Exporitmodell sowie ein Kernformverfahren verwendet werden kann, um die Gießform zu erstellen.

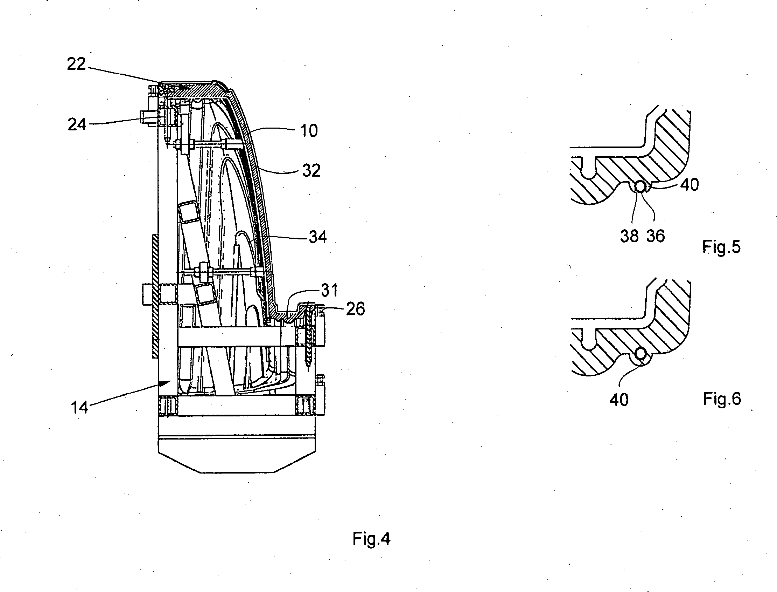

Figur 4 zeigt eine Schnittansicht von links auf den Stempel 4 gemäß Figur 2. Man sieht, dass der Anschuss in dem in Figur 4 oben liegenden Bereich erfolgt, wobei dieser Abschnitt mit einer verleichsweise großen Wandstärke ausgeführt ist. In dem die Kavität begrenzenden Bereich der Stempelschale 10 ist diese vergleichsweise dünnwandig ausgebildet. Diese Wandstärke ist selbstverständlich nach dem zu erwartenden Forminnendruck ausgelegt, beim dargestellten Windabweiser beträgt die Wandstärke nach dem Gießvorgang etwa 35mm. Dabei ist ein Bearbeitungsaufmaß von etwa 10mm berücksichtigt - diese Aufmaßschicht ist in Figur 4 mit dem Bezugszeichen 32 gekennzeichnet. Sie ist so bemessen, dass für einen sich nach dem Gießen anschließenden Feinstbearbeitungsvorgang genug Bearbeitungsaufmaß vorhanden ist, um die Werkzeugkavität mit der gewünschten Geometrie und Oberflächenqualität auszubilden. Diese Feinstbearbeitung kann beispielsweise dadurch erfolgen, dass die Stempelschalenoberfläche poliert oder gefräst poliert wird. In der Schnittdarstellung gemäß Figur 4 sieht man den vergleichsweise dünnwandigen, die Kavität ausbildenden Bereich der Stempelschale 10 und die Aufmaßschicht 32, die bei der Feinstbearbeitung im Wesentlichen abgetragen wird, so dass sich danach eine Wandstärke von beispielsweise 25mm (in dem die Kavität begrenzenden Bereich) ergibt.

Zur Temperierung des Werkzeuges ist die Stempelschale 10 mit Temperierungskanälen ausgebildet, über die das Werkzeug je nach Verfahrensschritt gekühlt oder aufgeheizt werden kann. Diese Temperierungskanäle können auf unterschiedliche Weise ausgebildet werden, wobei in jedem Fall bereits beim Gießen der Schalen 8, 10 entsprechende Vorkehrungen getroffen werden. Dies sei anhand der Figuren 5 und 6 erläutert, die unterschiedliche Ausführungen des Details D in Figur 4 zeigen.

Bei dem Ausführungsbeispiel gemäß Figur 5 werden im Bereich der Temperierungskanäle wulstförmige Vorsprünge 36 ausgebildet. Nach dem Gießvorgang werden sich entlang der wulstförmigen Vorsprünge 36 erstreckende Einfräsungen ausgebildet, in die Rohre (40), beispielsweise aus Edelstahl oder Kupfer eingesetzt werden, die dann den oder die Temperierungskanäle 34 ausbilden. Diese erstrecken sich über die Rückseite der Stempelschale 10.

In dem Fall, in dem man den Aufwand für die nachträgliche Fräsbearbeitung und das Einlegen der Rohre 40 scheut, können diese bereits beim Gießvorgang eingegossen werden. Dieses Ausführungsbeispiel ist in Figur 6 angedeutet. Bei einem derartigen Verfahren müssen die hochtemperarturbeständigen Rohre in die Stahlgußform als Einlegeteil eingebracht werden. Aufgrund der vergleichsweise hohen Schmelztemperatur des Werkzeugstahls werden diese Rohre vorzugsweise aus Keramik hergestellt. Nach dem Stahlgießen sind die Temperierungskanäle 34 bereits ausgebildet, so dass nur noch die Anschlussbereiche für den Kühl-/Heizmittelanschluss bearbeitet werden müssen.

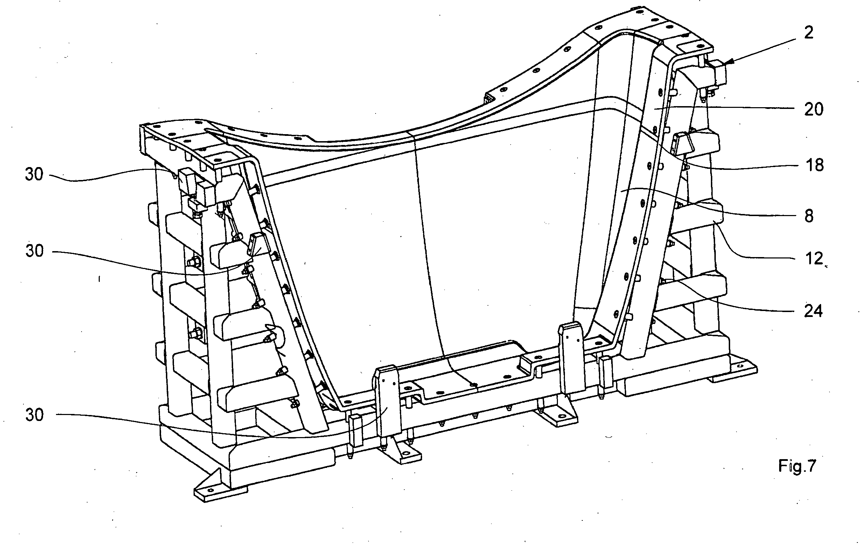

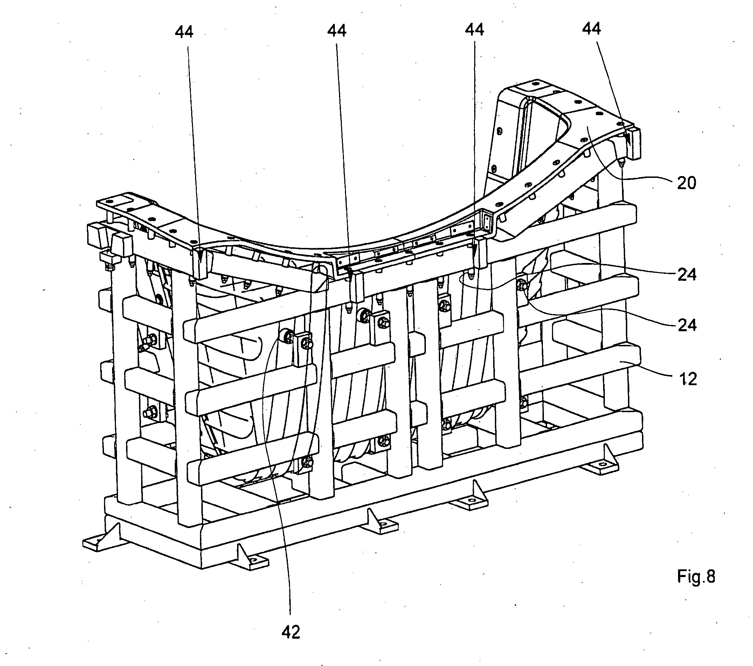

Figur 7 zeigt eine Einzeldarstellung der Matrize 2 aus Figur 1 und Figur 8 eine rückseitige Ansicht dieser Matrize 2. Deren Grundaufbau ist im Wesentlichen der gleiche wie beim Stempel 4, so dass zur Vermeidung von Wiederholungen nur die wesentlichen Elemente beschrieben werden. Die Matrize 2 besteht wiederum aus einer aus Stahlguß hergestellten Matrizenschale 8, deren in Figur 7 dem Betrachter zugewandter Bereich die Kavität begrenzt und deren außerhalb der Kavität angeordneter Bereich wiederum als Schalenrand 20 mit der in der Trennebene gelegenen Stirnwandung 18 ausgebildet ist. Die beim Pressen auftretenden Kräfte werden vom Tragrahmen 12 aufgenommen, der die Matizenschale 8 über eine Vielzahl von Stützbolzen 24 abstützt. Ähnlich wie beim Stempel 4 sind die im Bereich der Rückseite der Kavität angeordneten Stützbolzen 24 an rückseitig vorspringenden Stützvorsprüngen 42 befestigt, so dass die Wandung im Bereich der Kavität nicht durchsetzt werden muss. Die am Schalenrand 20 angreifenden Stützbolzen 24 durchsetzen die Schalenwandung. Am Tragrahmen 12 sind wiederum eine Vielzahl von Distanzblöcken 44 ausgebildet, die im Zusammenwirken mit den Distanzelementen 26 des Stempels 4 dessen maximale Absenkposition begrenzen. Wie bereits erwähnt, trägt der Tragrahmen 12 des Weiteren noch Führungselemente 30 (siehe Figur 7), die mit den Führungen 28 des Stempels 4 zusammenwirken um die Relativposition zwischen Matrize 2 und Stempel 4 festzulegen und zu verriegeln.

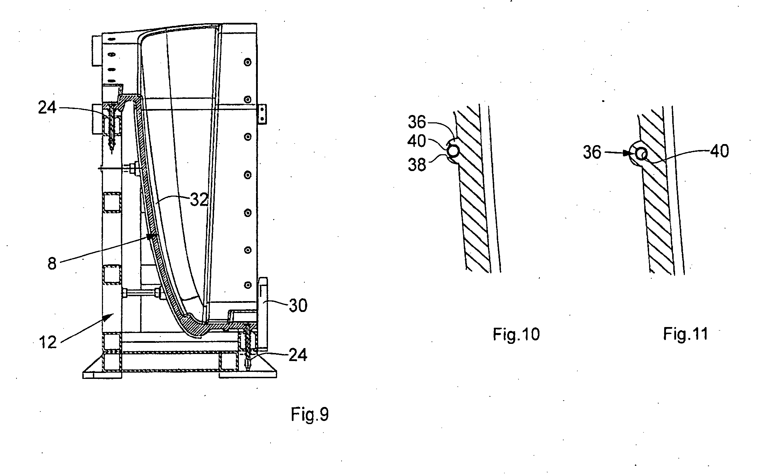

Figur 9 zeigt eine geschnittene Seitenansicht von links gemäß der Darstellung in Figur 7. Man sieht, dass die Matrizenschale 8 mit einer Außmaßschicht 32 versehen ist, die ein Polieren oder Fräspolieren der Matrizenschale 8 ermöglicht. Diese Aufmaßschicht beträgt wiederum etwa 10mm, so dass nach dieser Feinstbearbeitung die Wandstärke im Bereich der Kavität ca. 25mm beträgt. Diese Wandstärke kann jedoch in Abhängigkeit von der Formteilgeometrie und dem erforderlichen Forminnendruck variieren. Auch die Matrizenschale 8 ist mit einem oder mehreren Temperierungskanälen versehen, die gemäß den Figuren 10 und 11 ausgeführt sein können. Beim Ausführungsbeispiel gemäß Figur 10 sind an der Rückseite der Matrizenschale 8 entlang den vorgesehenen Temperierungskanäle 37 wiederum wulstförmige Vorsprünge 36 ausgebildet, die nach dem Stahlgießvorgang mit Einfräsungen 38 versehen werden, in die Rohre 40 eingesetzt werden, um die Temperierungskanäle 34 ausbilden.

Beim Ausführungsbeispiel gemäß Figur 11 sind die aus hochtemperaturbeständigem Material ausgebildeten Rohre 40 als Einlegeteile in die Stahlgießform eingesetzt, so dass nach dem Gießvorgang die Rohre 40 im Bereich der wulstförmigen Vorsprünge 36 integriert sind und nur minimale Nachbearbeitungen im Anschlussbereich erforderlich sind.

Für die Matrizen- und Stempelschale 8, 10 kann herkömmlicher Werkzeugstahl, beispielsweise 40CrMnNo7 1.2311 oder dergleichen verwendet werden.

Die vorbeschriebenen Wandstärken sind lediglich beispielhaft erläutert, wesentlich ist, dass das Formwerkzeug aus Gussschalen mit jeweiligen Tragkonstruktionen ausgebildet ist. Diese vergleichsweise dünnwandigen Schalen können sehr einfach im Gießverfahren hergestellt werden, so dass der verfahrenstechnische Aufwand minimal ist.

Offenbart ist ein Formwerkzeug zum Herstellen von Kunststoffverbundbauteilen mit einer eine Werkzeugkavität begrenzender Matrize und einem Stempel. Erfindungsgemäß sind die Matrize und der Stempel im Wesentlichen aus einer in einem Gießverfahren hergestellten dünnwandigen Schale ausgebildet, die jeweils in einer Tragkonstruktion abgestützt ist.

### Bezugszeichenliste:

- 2: Matrize
- 4: Stempel
- 6: Konsole
- 8: Matrizenschale
- 10: Stempelschale
- 12: Tragrahmen
- 14: Tragrahmen
- 16: Formrand
- 18: Stirnwandung
- 20: Schalenrand
- 22: Anschluß
- 24: Stützbolzen
- 26: Distanzelemente
- 28: Führung
- 30: Führungselemente
- 31: Stützabschnitt
- 32: Aufmaßschicht
- 34: Temperierungskanal
- 36: Vorsprung
- 38: Einfräsung
- 40: Rohr
- 42: Stützvorsprung
- 44: Distanzblöcke

## Patentansprüche

1. Formwerkzeug zum Herstellen von Kunststoffverbundbauteilen mit einer eine Werkzeugkavität begrenzenden Matrize (2) und einem Stempel (4), wobei die Matrize (2) und der Stempel (4) jeweils aus einer in einem Gießverfahren hergestellten dünnwandigen Schale (8, 10) ausgebildet sind, wobei die Schalen (8, 10) jeweils in einer Tragkonstruktion abgestützt sind
**dadurch gekennzeichnet, dass** die Abstützung des Stempels (4) und der Matrize (2) durch die Tragrahmen (12, 14) über eine Vielzahl von Stützbolzen (24) erfolgt, wobei bei dem Stempel (4) die Stützbolzen (24) in Streben des Tragrahmens (14) verankert sind, und bei der Matrize (2) die im Bereich der Rückseite der Kavität angeordneten Stützbolzen (24) an rückseitig vorspringenden Stützvorsprüngen (42) befestigt sind.

2. Formwerkzeug nach Patentanspruch 1, wobei die die Kavität begrenzenden Großflächen der Gussschalen (8, 10) durch Polieren und/oder Fräsen feinstbearbeitet sind, wobei zur Feinstbearbeitung ein Aufmaß vorgesehen ist, das beim Gießvorgang berücksichtigt ist.

3. Formwerkzeug nach Patentanspruch 1 oder 2, wobei das Gießmaterial Werkzeugstahl ist.

4. Formwerkzeug nach einem der vorhergehenden Patentansprüche, wobei die Wandstärke der Gussschalen (8,10) kleiner 50mm vorzugsweise ≤ 35 mm ist.

5. Formwerkzeug nach Patentanspruch 2, wobei das Aufmaß ≤ 15mm vorzugsweise etwa 10mm beträgt.

6. Formwerkzeug nach einem der vorhergehenden Patentansprüche, wobei in oder an der Gussschale (8, 10) Temperierungskanäle (34) ausgebildet sind.

7. Formwerkzeug nach Patentanspruch 6, wobei die Temperierungskanäle (34) durch Rohre (40) ausgebildet sind, die nachträglich in die Gussschale (8, 10) eingesetzt oder beim Gießen eingebracht werden.

8. Formwerkzeug nach Patentanspruch 7, letzte Alternative, wobei die Rohre (40) als Keramikeinlegeteile ausgebildet sind.

## Claims

1. Moulding tool for producing composite plastics components having a bottom die (2) which delimits a tool cavity and an upper die (4), the bottom die (2) and the upper die (4) each being constructed from a thin-walled shell (8, 10) which is produced in a casting method, the shells (8, 10) each being supported in a carrier construction, **characterised in that** the support of the upper die (4) and the bottom die (2) is brought about by the carrier frame (12, 14) via a large number of support studs (24), the support studs (24) being secured in struts of the carrier frame (14) in the upper die (4) and the support studs (24) arranged in the region of the rear side of the cavity being fixed in the bottom die (2) to support projections (42) which project at the rear side.

2. Moulding tool according to patent claim 1, wherein the large faces of the casting shells (8, 10) are extremely finely processed by polishing and/or milling, which large faces delimit the cavity, wherein an overmeasure which is taken into consideration during the casting operation is provided for the extremely fine processing.

3. Moulding tool according to patent claim 1 or 2, wherein the casting material is tool steel.

4. Moulding tool according to any one of the preceding patent claims, wherein the wall thickness of the casting shells (8, 10) is smaller than 50 mm, preferably ≤ 35 mm.

5. Moulding tool according to patent claim 2, wherein the overmeasure is ≤ 15 mm, preferably approximately 10 mm.

6. Moulding tool according to any one of the preceding patent claims, wherein temperature adjustment channels (34) are formed in or on the casting shell (8, 10).

7. Moulding tool according to patent claim 6, wherein the temperature adjustment channels (34) are formed by tubes (40) which are subsequently introduced into the casting shell (8, 10) or formed during the casting operation.

8. Moulding tool according to patent claim 7, last alternative, wherein the tubes (40) are in the form of ceramic material inserts.

## Revendications

1. Outil de formage servant à fabriquer des éléments composites en plastique, comprenant une matrice (2) délimitant une cavité d'outil et un poinçon (4), sachant que la matrice (2) et le poinçon (4) sont respectivement réalisés à partir d'une coquille (8, 10) à paroi mince fabriquée lors d'un procédé de coulée, sachant que les coquilles (8, 10) sont en appui respectivement dans une structure porteuse, **caractérisé en ce que** le support du poinçon (4) et de la matrice (2) se fait grâce aux cadres porteurs (12, 14) par l'intermédiaire d'une pluralité de boulons de soutien (24), sachant que dans le cas du poinçon (4), les boulons de soutien (24) sont ancrés dans des montants du cadre porteur (14), et que dans le cas de la matrice (2), les boulons de soutien (24) disposés dans la zone du côté arrière de la cavité sont fixés au niveau de parties de soutien faisant saillie (42) côté arrière.

2. Outil de formage selon la revendication 1, sachant que les grandes surfaces délimitant la cavité des coques coulées (8, 10) sont soumises à une finition de haute précision par polissage et/ou par fraisage, sachant qu'est prévue, aux fins de la finition de haute précision, une surépaisseur, qui est prise en compte lors de l'opération de coulée.

3. Outil de formage selon la revendication 1 ou 2, sachant que le matériau de coulée est un acier pour outil.

4. Outil de formage selon l'une quelconque des revendications précédentes, sachant que l'épaisseur de paroi des coques coulées (8, 10) est inférieure à 50 mm, de préférence inférieure ou égale à 35 mm.

5. Outil de formage selon la revendication 2, sachant que la surépaisseur est inférieure ou égale à 15 mm, de préférence est d'environ 10 mm.

6. Outil de formage selon l'une quelconque des revendications précédentes, sachant que des canaux de régulation de la température (34) sont réalisés dans ou au niveau de la coquille coulée (8, 10).

7. Outil de formage selon la revendication 6, sachant que les canaux de régulation de la température (34) sont réalisés par des tubes (40), qui sont insérés ultérieurement dans la coquille coulée (8, 10) ou sont mis en place lors de la coulée.

8. Outil de formage selon la revendication 7, dernière variante, sachant que les tubes (40) sont réalisés sous la forme de pièces en céramique à insérer.
